(19)

Europäisches
Patentamt
European
Patent Office
Office européen
des brevets

(11) **EP 4 722 648 A1**

(12) **EUROPEAN PATENT APPLICATION**

(43) Date of publication:
**08.04.2026   Bulletin 2026/15**

(21) Application number: **24204887.4**

(22) Date of filing: **07.10.2024**

(51) International Patent Classification (IPC):
***G01C 19/5776*** (2012.01)

(52) Cooperative Patent Classification (CPC):
**G01C 19/5776**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Murata Manufacturing Co., Ltd.
Nagaokakyo-shi, Kyoto 617-8555 (JP)**

(72) Inventors:
• **Aaltonen, Lasse
  02240 Espoo (FI)**
• **Ruohio, Jaakko
  00100 Helsinki (FI)**

(74) Representative: **Boco IP Oy Ab
Kansakoulukatu 3
00100 Helsinki (FI)**

(54) **CAPACITIVE MEMS GYROSCOPE**

(57)   The disclosure relates to a MEMS gyroscope comprising a moving structure, a first stator, and a second stator to which a supplementary voltage signal is applied. The moving structure and the first stator form a first capacitor, and the moving structure and the second stator form a second capacitor. The moving structure is config- ured to move so that a capacitance of the first capacitor increases when a capacitance of the second capacitor decreases. The advantage of this arrangement is that the undesired AC current component induced by the driving signal is reduced without adding a second noisy drive electrode to the gyroscope.

Figure 2a

**Description**

FIELD OF THE DISCLOSURE

The present disclosure relates to a MEMS gyroscope, and particularly to a capacitive MEMS gyroscope.

BACKGROUND OF THE DISCLOSURE

Traditional microelectromechanical (MEMS) gyroscopes contain a moving structure, which usually comprises a part of a silicon wafer. The moving structure is suspended from a fixed element, which is usually a fixed part of the same wafer. The moving structure may be connected to a capacitive transducer, which is actuated using electrostatic forces. The MEMS gyroscope with the capacitive transducer is a type of gyroscope that uses the principles of capacitance to measure and detect changes in angular velocity or rotation. The moving structure of the gyroscope with capacitive transducer may be actuated using electrostatic forces. Electrostatic force may be generated by applying a voltage difference between the moving structure and fixed electrodes. This voltage difference may be used to make the moving structure oscillate. When the gyroscope is subjected to rotation, the Coriolis effect causes the oscillation of the moving structure to be modulated, and this modulation can be measured with a capacitive transducer. This modulation is directly proportional to the angular rate of the gyroscope.

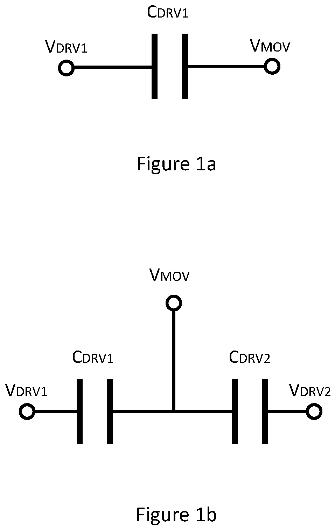

The capacitive MEMS gyroscopes require a high voltage driving signal to be applied for inducing the drive oscillation of the moving structure. Figure 1a illustrates a single-ended drive arrangement. A driving voltage $V_{DRV1}$ comprises a DC voltage component and an AC voltage component. The sense oscillation induced by the Coriolis force has the same frequency as the AC voltage component in the drive voltage signal. This can make the determination of the actual angular rate of the gyroscope difficult because the AC current induced by the drive signal in the moving structure, may disturb the sense oscillation measurement, when converting to AC voltage for example in net $V_{MOV}$. From a package design point of view, single-ended driving is often a preferred solution since there is only a single noisy drive electrode which might create disturbances. However, the induced AC currents can be significant when this kind of driving is used.

One solution for reducing the induced AC currents is to use a differential drive arrangement, illustrated schematically in Figure 1b. A second driving signal $V_{DRV2}$ is supplied which, however, has the same magnitude as the first driving signal $V_{DRV1}$, but opposite AC polarity. The benefit of a differential drive arrangement is that the DC electrostatic force, produced by the two drive electrodes is equal while the two driving signals have different AC polarity. The total DC electrostatic force, and the induced AC current, is thus effectively zeroed. This solution, however, utilizes two noisy drive electrodes and requires more complex packaging, which adds complexity and cost to the device.

BRIEF DESCRIPTION OF THE DISCLOSURE

An object of the present disclosure is to provide a MEMS gyroscope which combines the benefits of single-ended and differential drive arrangements.

The object of the disclosure is achieved by what is stated in the independent claims. Some embodiments of the disclosure are disclosed in the dependent claims.

The disclosure is based on the idea of a MEMS gyroscope comprising a moving structure, a first stator and a second stator, which form two capacitors, and wherein the moving structure is configured to move between the first stator and the second stator so that capacitance of one capacitor is increasing while capacitance of another capacitor is decreasing. The first stator is connected to a drive voltage signal with an AC voltage component, while the second stator is connected to a DC supplementary voltage signal.

An advantage of the arrangement of the disclosure is that capacitance of the first capacitor is increasing while capacitance of the second capacitor is decreasing with the moving structure displacement, which reduces the undesired AC current component induced by the driving signal. Nevertheless, a second noisy drive electrode is not needed in the gyroscope.

BRIEF DESCRIPTION OF THE DRAWINGS

In the following the disclosure will be described in greater detail by means of preferred embodiments with reference to the accompanying drawings, in which:

Figure 1a illustrates an electrical model of a single-ended drive of a capacitive MEMS gyroscope.

Figure 1b illustrates an electrical model of a differential drive of a capacitive MEMS gyroscope.

Figure 2a illustrates an electrical model of a drive of a capacitive MEMS gyroscope of this disclosure.

Figure 2b illustrates a first example of a physical model of the drive of the capacitive MEMS gyroscope of this disclosure.

Figure 2c illustrates a) a x-y plane view of a gyroscope with a moving structure moving linearly, and b) a cross-section of a gyroscope with the moving structure rotating out of a device plane.

Figure 3a illustrates a second example of a physical model of the drive of the capacitive MEMS gyroscope of this disclosure, wherein parts of the moving structure move in a first direction.

Figure 3b illustrates the second example of the physical model of the drive of the capacitive MEMS gyroscope of this disclosure, wherein the parts of the moving structure move in a second direction.

Figure 3c illustrates a cross-section of a gyroscope with the parts of the moving structure rotating out of a device plane of the second of this disclosure.

The figures are for illustrative purposes only and are not shown in scale.

DETAILED DESCRIPTION OF THE DISCLOSURE

Traditional microelectromechanical (MEMS) gyroscopes contain a moving structure, which usually comprises a part of a silicon wafer. The moving structure is suspended from a fixed element, which is usually a fixed part of the same wafer. The moving structure may be connected to a capacitive transducer which is actuated using electrostatic forces. Capacitive MEMS gyroscopes use electrostatic force via drive electrodes to set a moving structure into oscillation. The oscillation must be as continuous and stable as possible. Example of the simplest electrical model of a differential drive in the capacitive MEMS gyroscope is illustrated in Figure 1.

The electrostatic force affecting the moving structure of the differential drive may be formulated as:

$$F_{ES} = \frac{1}{2}\frac{dC_{DRV1}}{dx}(V_{MOV} - V_{DRV1})^2 + \frac{1}{2}\frac{dC_{DRV2}}{dx}(V_{MOV} - V_{DRV2})^2$$

where $V_{MOV}$-$V_{DRV1}$ defines a voltage over $C_{DRV1}$, and $V_{MOV}$-$V_{DRV2}$ defines a voltage over $C_{DRV2}$. Alternatively, the electrostatic force affecting the moving structure of a single-ended drive may be formulated as comprising only one component of the differential drive:

$$F_{ES} = \frac{1}{2}\frac{dC_{DRV1}}{dx}(V_{MOV} - V_{DRV1})^2$$

In most cases, the drive voltages can comprise time independent DC term and time dependent AC term, which may be defined as:

$$V_{DRV1}(t) = V_{DRVDC} + V_{AC}(t) \quad \text{and} \quad V_{DRV2} = V_{DRVDC} - V_{AC}(t)$$

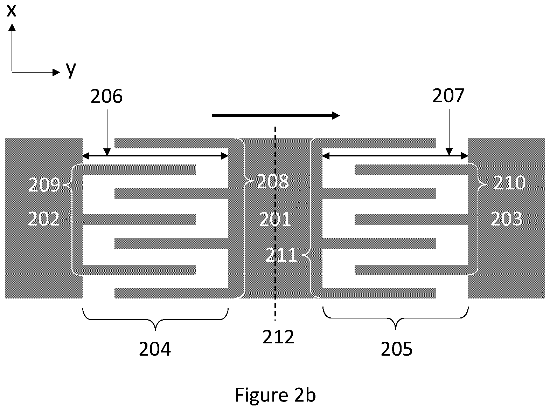

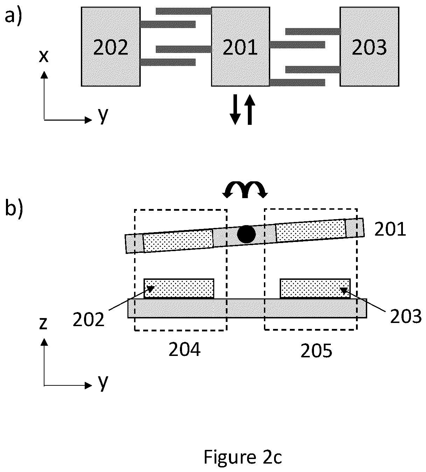

For the simplicity of representation, an example where drive is linear comb (as in Figure 2b) may be considered. In this case, the derivative of capacitances can be written as constant $K_{DRV}$. If, further, it is assumed that the capacitances $C_{DRV2}$ and $C_{DRV1}$ are matching and sum $C_{DRV2}$ + $C_{DRV1}$ is time independent with the motion of the moving structure, the following can be defined:

$$\frac{dC_{DRV1}}{dx} = K_{DRV}; \ -K_{DRV} = \frac{dC_{DRV2}}{dx} = -\frac{dC_{DRV1}}{dx}$$

The drive voltages $V_{DRV1}$ and $V_{DRV2}$ across the capacitances may be rewritten as:

$$V_{CDRV1} = V_{MOV} - V_{DRVDC} + V_{DRVAC}(t) = V_{DC} + V_{AC}(t)$$

$$V_{CDRV2} = V_{MOV} - V_{DRVDC} - V_{DRVAC}(t) = V_{DC} - V_{AC}(t)$$

where $V_{CDRV1}$ is a voltage over $C_{DRV1}$, and $V_{CDRV1}$ is a voltage over $C_{DRV1}$.

The electrostatic force for the single-ended drive can be rewritten in form:

$$F_{ES} = \frac{1}{2} K_{DRV} * (V_{DC} + V_{AC})^2 = \frac{1}{2} K_{DRV}(V_{DC})^2 + K_{DRV} * V_{DC} * V_{AC} + \frac{1}{2} K_{DRV}(V_{AC})^2$$

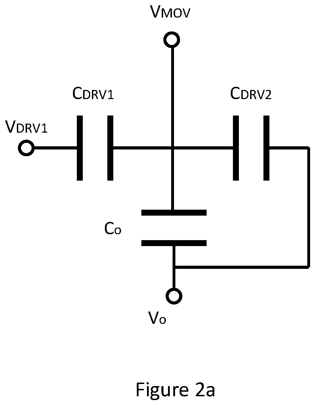

The single-ended drive has the benefit of having only one noisy DRV electrode, which simplifies symmetrizing parasitic coupling and requires only one connection between the electronics and the gyroscope. The differential drive, in contrast, has the benefit of the DC electrostatic force component, $\frac{1}{2} K_{DRV}(V_{DC})^2$, produced by the two drive electrodes DRV1 and DRV2, which are equal but have different polarities. The DC electrostatic force is thus effectively balanced to zero and the AC current is minimized. This invention combines the benefits of the single-ended and the differential drives by introducing a supplementary signal net $V_o$ and connecting one of two stators (e.g. DRV2) to a supplementary voltage signal $V_o$, as Figure 2a illustrates.

The added new $V_o$ may be, for example, a ground net voltage, which may be needed, for example, for protecting sensitive components from the external noise sources, for preventing signal distortion and crosstalk, for connecting otherwise floating layers, or for biasing the bulk silicon. The $V_o$ value may be 0V or low voltage such as 0.75V, 0.9V, 1.25, 1.6, or 2.5V, having low noise, and preferably low impedance DC bias. Setting $V_{DRV2}$ to $V_o$, as Figure 2a illustrates, removes the $V_{DRV2}$ pad, which is normally connected to the respective drive net of the electronics in case of the differential drive. The invention then simplifies to the single-ended drive model. For the simplicity of analysis it is assumed that $V_{DC}$ is same across $C_{DRV1}$ and $C_{DRV2}$. The AC current induced in the moving structure in such case may be defined as:

$$I_{DRV_{MOV}} = \frac{d[C_{DRV1}(t) * (V_{DC} + V_{AC}(t))]}{dt} + \frac{d[C_{DRV2}(t) * (V_{DC})]}{dt}$$

$$= \frac{d[C_{DRV1}(t)]}{dt} * (V_{DC} + V_{AC}(t)) + \frac{d[C_{DRV2}(t)]}{dt} * (V_{DC})$$

$$+ C_{DRV1}(t) * \frac{d[V_{AC}(t)]}{dt}$$

In practice, $C_{DRV2}$ may not be ideally stable and may be placed more freely in the MEMS gyroscope. The main purpose of $C_{DRV2}$ may be to reduce the AC current in the moving structure. If $dC_{DRV1}/dt$ is not equal to $dC_{DRV2}/dt$, then the bias across the two capacitors can be adjusted to reduce the AC current in the moving structure.

When assuming the two drive capacitors $C_{DRV1}$ and $C_{DRV2}$ are equal in size but have different sensitivity to the motion of the moving structure, i.e. $d(C_{DRV2})/dt = -d(C_{DRV1})/dt$, the equation simplifies to

$$I_{DRV_{MOV}} = \frac{d[C_{DRV1}(t)]}{dt} * V_{AC}(t) + C_{DRV1}(t) * \frac{d[V_{AC}(t)]}{dt}$$

The AC voltage is typically at least 20 times smaller than the DC voltage and, therefore, the resulting current is also equally decreased. Same applies to the electrostatic force, which can be written as:

$$F_{ES} = \frac{1}{2} K_{DRV} * (V_{DC} + V_{AC})^2 - \frac{1}{2} K_{DRV} * V_{DC}^2 = K_{DRV} * V_{DC} * V_{AC} + \frac{1}{2} K_{DRV} V_{AC}^2$$

An advantage of the absence of the DC electrostatic force is that the moving structure stays in the same average position as with zero bias at all driving electrodes.

A MEMS gyroscope comprising a moving structure, a control unit which is configured to apply a bias voltage signal to the moving structure, a first stator, wherein the moving structure and the first stator form a first capacitor, and the control unit is also configured to apply a drive voltage signal to the first stator, wherein the drive voltage signal comprises an AC drive voltage component and a DC drive voltage component, a second stator, wherein the moving structure and the second stator form a second capacitor, and wherein the moving structure and the first and second stators are configured so that a capacitance of the first capacitor increases when a capacitance of the second capacitor decreases, and vice versa, characterized in that the control unit is also configured to apply a supplementary voltage signal to the second stator, and the supplementary voltage signal comprises a DC supplementary voltage component and comprises no AC voltage component.

The first embodiment of the MEMS gyroscope of this disclosure, which corresponds to the electrical model of Figure 2a described above, is schematically illustrated in Figure 2b. The MEMS gyroscope comprises a moving structure 201. The moving structure may also be called a moving element or a proof mass. The moving structure corresponds to the moving structure of the description above. The moving structure 201 is configured to move. A bias voltage signal $V_{MOV}$ may be applied to the moving structure 201.

The moving structure may be formed in a device layer. The device layer may be a device wafer such as, for example, a silicon wafer. Alternatively, the device layer may be a layer which has been deposited on a substrate. The device layer may also be called a structural layer. The device layer may be a silicon layer.

The device layer may comprise fixed parts which are immobile in relation to the surrounding device package. The device layer may also comprise parts which are mobile in relation to the device package and the fixed parts. These mobile parts include the moving structure and flexible suspenders which attach the moving structure to fixed parts. The moving structure may move in-plane in the plane defined by the device plane. The moving structure may move out-of-plane in a direction which is perpendicular to the plane defined by the structural layer. The micromechanical structures which form the moving structure can be prepared in the device layer by etching the layer. When the structures are completed, the fixed parts of the device layer may form a supporting body which surrounds the moving structure in the device plane. The device layer itself may be structurally supported by a separate, thicker support wafer or substrate during manufacturing and/or in the finished gyroscope. The support wafer may be called a handle wafer.

The word "moving structure" refers in this disclosure to a mobile part which may be formed in the device layer. The movement of the moving structure in response to a force may be determined by the direction and magnitude of the force, by the flexible properties of the suspenders, by the damping effects inflicting the moving structure, and by the size/weight of the moving structure. If multiple moving structures are coupled together, the movement may also be determined by the properties of the coupling springs which join the proof masses to each other.

A fixed structure which is adjacent to the proof mass may be called a stator. This terminology may be used in this disclosure to distinguish between capacitor combs formed on the mobile moving structure (moving capacitor structures) and capacitor combs formed on an adjacent fixed structure (stator capacitor structures).

The MEMS gyroscope of this disclosure comprises a first stator 202. The first stator 202 may also be called a first static element. A drive voltage signal $V_{DRV1}$ is applied to the first stator. In other words, the first stator 202 may be set to a first stator voltage potential by the drive voltage signal $V_{DRV1}$. The MEMS gyroscope also comprises a second stator 203. The second stator 203 may also be called a second static element. The second stator 203 is connected to a supplementary voltage signal $V_o$. In other words, the second stator 203 may be set to a second stator voltage potential by the supplementary voltage signal Vo.

In this disclosure, the moving structure may comprise a mass element. In some embodiments, the mass element may form the first and second capacitors with the first and second stators. In other embodiments, the moving structure may comprise other parts (such as, for example, the first and second part as described later), which are connected to the mass element with flexible coupling springs. The other parts may form the first and second capacitors with the first and second stators. In other embodiments, the mass element may form the first capacitor with the first stator (i.e. the mass element may be the first part) and the moving structure may comprise a second part which forms the second capacitor with the second stator.

The MEMS gyroscope, wherein the first capacitor and the second capacitor are configured so that, when the moving structure moves, the capacitance change in the first capacitor and the capacitance change in the second capacitor have equal magnitude, but opposite sign.

As Figure 2b illustrates, the moving structure and the first stator 202 form a first capacitor. The moving structure and the second stator 203 form a second capacitor. The moving structure 201 may be configured to move in relation to the first stator 202 and the second stator 203. The moving structure 201 is configured to move so that a capacitance $C_{DRV1}$ of the first capacitor 204 is increasing while a capacitance $C_{DRV2}$ of the second capacitor 205 is decreasing. In other words, when the distance 206 between the moving structure 201 and the first stator 202 decreases and the capacitance $C_{DRV1}$ of the first capacitor 204 increases, the distance 207 between the moving structure 201 and the second stator 203 increases and the capacitance $C_{DRV2}$ of the second capacitor 205 increases. Alternatively, when the distance 206 between the moving structure 201 and the first stator 202 increases and the capacitance $C_{DRV1}$ of the first capacitor 204 decreases, the distance 207 between the moving structure 201 and the second stator 203 decreases and the capacitance $C_{DRV2}$ of the second capacitor 205 decreases. In other words, the capacitor 104 and the capacitor 105 may have opposite polarities. In other words, wherein the first capacitor and the second capacitor are configured so that, when the moving structure moves, the capacitance change in the first capacitor and the capacitance change in the second capacitor have equal magnitude, but opposite signs. In Figure 2b, the arrow illustrates the direction in which the moving structure moves.

Figure 2c illustrates different types of the first capacitor and the second capacitor in the MEMS gyroscope. The arrows in examples a) and b) illustrate the direction in which the moving structure moves. The first capacitor 204 and the second capacitor 205 may be, for example, parallel plate capacitors as in a) - b) of Figure 2c. In the capacitors, the moving structure may move along x-direction when linearly oscillating between the first stator and the second stator, as in example a). Alternatively, the structure of example a) may be oscillating in rotational motion around z-axis. Alternatively, as in example b), the moving structure may rotate out of the x-y plane.

The MEMS gyroscope, wherein the DC supplementary voltage component of the supplementary voltage signal is less than the DC drive voltage component of the drive voltage signal.

The drive voltage signal $V_{DRV1}$ comprises an AC drive voltage component and a DC drive voltage component. The DC drive voltage component of the drive voltage signal $V_{DRV1}$ may be 0.5 - 2.5 V. The AC drive voltage component is used to create AC electrostatic force and induce the oscillation of the moving structure 201.

The moving structure may be set to a moving structure electric potential by a bias voltage signal $V_{MOV}$. In other words, the bias voltage signal $V_{MOV}$ may be applied to the moving structure. The bias voltage signal $V_{MOV}$ is a high voltage signal. The bias voltage signal $V_{MOV}$ may be larger than the DC drive voltage component of the drive voltage signal $V_{DRV1}$. The bias voltage signal $V_{MOV}$ may be smaller than the DC drive voltage component of the drive voltage signal $V_{DRV1}$. The bias voltage signal $V_{MOV}$ may have opposite polarity to the DC drive voltage component of the drive voltage signal $V_{DRV1}$. All parts of the moving structure are set at the same electric potential. The bias voltage signal $V_{MOV}$ may be DC biased. $V_{MOV}$ may be set to +5 - +30 V. Alternatively, $V_{MOV}$ may be set to -5 - -30 V. The bias voltage may comprise no AC component. An effective drive DC voltage may be formed as a difference between DC voltage component of the $V_{DRV1}$ and DC voltage component of the $V_{MOV}$.

The supplementary voltage signal $V_o$ is a DC signal. In other words, the supplementary voltage signal comprises a DC supplementary voltage component. The supplementary voltage signal comprises no AC voltage component. The supplementary voltage signal $V_o$, when having positive polarity, may be less that the DC voltage component of the drive voltage signal $V_{DRV1}$. The supplementary voltage signal Vo, when having negative polarity, may be greater that the DC voltage component of the drive voltage signal $V_{DRV1}$. An effective supplementary voltage may be formed as a difference between Vo and DC voltage component of the $V_{MOV}$.

The DC supplementary voltage component may compensate for the mismatch between first and second capacitors.

In this disclosure, the voltage applied to each element of the MEMS gyroscope (except the first capacitor and the second capacitor) may be defined as the potential difference between this element (such as, for example, moving structure) and the bias voltage signal $V_{MOV}$ potential.

In any embodiment presented in this disclosure, the MEMS gyroscope may comprise a control unit. The control unit may be configured to generate control signals and to transmit these signals to the moving structure and stators described above. The control unit may thereby set the electric potential of the moving structure and stators. The control signals may for example comprise the drive voltage signal, the supplementary voltage signals and other voltage signals discussed in this disclosure.

The MEMS gyroscope may comprise a MEMS die, where MEMS device structures, such as the moving structure and the first and second stators, are formed. The control unit may be an application-specific integrated circuit which is electrically connected to the MEMS dies and the MEMS device structures.

Alternatively, the application-specific integrated circuit may be integrated into the same MEMS die.

The device layer, as described above, may define the device plane of the gyroscope. The device plane may be a horizontal plane (xy-plane) as illustrated in Figure 2b. The horizontal plane comprises an x-direction. The horizontal plane may also comprise a y-direction. The x-direction may be perpendicular to y-direction. A vertical direction may be perpendicular to the horizontal plane. The vertical direction (or a z-direction) may be aligned with a z-axis. In this disclosure, the terms "horizontal" and "vertical" do not refer to the orientation of the device with regard to the direction of earth's gravitational field either when the device is manufactured or when it is in use. Instead, the word "horizontal" simply defines a plane and "vertical" defines a direction which is perpendicular to that plane.

The MEMS gyroscope, wherein the moving structure lies in a device layer, wherein the device layer defines a device plane.

The MEMS gyroscope, wherein the first stator and the second stator are in the device layer.

The MEMS gyroscope, wherein the first stator and the second stator are parallel to the device layer and aligned adjacent to the moving structure, and the z-coordinate of the first stator and the second stator differs from the z-coordinate of the moving structure.

The MEMS gyroscope, wherein the moving structure is configured to be driven linearly in the device plane by the drive voltage signal.

The MEMS gyroscope, wherein the moving structure is configured to be driven in rotational motion around z-direction in the device plane by the drive voltage signal.

The MEMS gyroscope, wherein the moving structure is configured to be driven in rotational motion out of the device plane by the drive voltage signal.

The moving structure 201 may be configured to move linearly in the device plane. In particular, the moving structure 201 may be configured to move along y-direction. The moving structure 201 may be in an actuated state when oscillating back and forth in linear translation in the device plane. In other words, the moving structure 201 may be in an actuated state when moving along the y-direction between the first stator 202 and the second stator 203. Alternatively, the moving structure 201 may be in an actuated state when oscillating in rotational motion around the z-direction in the device plane. The moving structure 201 may be configured to move both back and forth in linear translation and in rotational motion around the z-direction in the device plane. The moving structure 201 may be in a non-actuated state when its position is not changing in relation to the first stator 202 and the second stator 203.

In this example, when the moving structure is moving in the device plane, the first stator and the second stator may also be in the device plane.

The moving structure may be configured to rotate out of the device plane. The moving structures may be in the actuated state when moving in rotational oscillation out of the device plane. The moving structure may be in a non-actuated state when it is in the device plane. The moving structure may be in a non-actuated state when its position is not changing in relation to the first stator and the second stator.

In this example, when the moving structure is moving rotationally out of the device plane, the first stator and the second stator may also be in the device plane. Alternatively, the first stator and the second stator may not be in the device plane. When the first stator and the second stator are not be in the device plane, they may still be aligned adjacent to the moving structure in a vertical direction (which may be perpendicular to the device plane) in order to facilitate the movement of the moving structure out of the device plane. The z-coordinate of the first stator and the second stator may differ from the z-coordinate of the moving structure. In this arrangement, the first capacitor may be configured to move out of the device plane. The second capacitor may also be configured to move out of the device plane.

Example 1

The MEMS gyroscope, wherein the moving structure comprises a central body, and all parts of the central body always move in the same direction, and the central body comprises a first set of moving capacitor structures and a second set of moving capacitor structures, and the first stator comprises a first set of stator capacitor structures, and the second stator comprises a second set of stator capacitor structures, and wherein the first set of moving capacitor structures and the first set of stator capacitor structures form the first capacitor, and the second set of moving capacitor structures and the second set of stator capacitor structures form the second capacitor, and wherein the first capacitor and the second capacitor are formed on the opposite sides from the central body.

The MEMS gyroscope, wherein the first capacitor is mirror-symmetric with the second capacitor with respect to a central line which crosses the central body.

In the first example of this disclosure, which is illustrated in Figure 2b, the first capacitor 204 and the second capacitor 205 may be comb capacitors. The moving structure may contain a central body 201. The central body 201 may be called a mass element. The central body 201 may be a rigid solid body.

The central body 201 may comprise a first set of moving capacitor structures 208. The first set of moving capacitor structures 208 may be in the device layer. The first set of moving capacitor structures 208 may extend away from the central body 201. The central body 201 of this example may be configured to move as a rigid structure between the first stator 202 and the second stator 203.

The first stator 202 may comprise a first set of stator capacitor structures 209. The first set of stator capacitor structures 209 may be in the device layer. The first set of stator capacitor structures 209 may extend away from the first stator 202. The first set of stator capacitor structures 209 may interdigitate with the first set of moving capacitor structures 208. The first set of stator capacitor structures 209 and the first set of moving capacitor structures 208 may form the first capacitor 204.

The second stator 203 may comprise a second set of stator capacitor structures 210. The second set of stator capacitor structures 210 may be in the device layer. The second set of stator capacitor structures 210 may extend away from the second stator 203.

The central body 201 may comprise a second set of moving capacitor structures 211. The second set of stator capacitor structures 210 may interdigitate with the second set of moving capacitor structures 211. The second set of stator capacitor structures 210 and the second set of moving capacitor structures 211 may form the second capacitor 205.

The first capacitor 204 may be mirror-symmetric with the second capacitor 205 with respect to a central line 212 which crosses the central body 201, as illustrated in Figure 2b. Alternatively, the first capacitor 204 may be asymmetric with the second capacitor 205 with respect to the central line 212 which crosses the central body 201 (not-illustrated).

The first set of the moving capacitor structures 208 may extend from the central body 201 in the negative y-direction. The first set of the stator capacitor structures 209 may extend from the first stator 202 in the positive y-direction. The second set of the moving capacitor structures 211 may extend from the central body 201 in the positive y-direction. The second set of the stator capacitor structures 210 may extend from the second stator 203 in the negative y-direction. In this example, the central body with the first set of the moving capacitor structures 208 and the second set of the moving capacitor structures 211 may be configured to move in the opposite directions. Specifically, when the central body moves in the positive y-direction, the capacitance $C_{DRV1}$ of the first capacitor 104 may decrease while the capacitance $C_{DRV2}$ of the second capacitor 105 may increase. Alternatively, when the central body moves in the negative y-direction, the capacitance $C_{DRV1}$ of the first capacitor 104 may increase while the capacitance $C_{DRV2}$ of the second capacitor 105 may decrease.

The capacitor structures may, for example, be comb fingers. The first set of the moving comb fingers may be interdigitated with the first set of the stator comb fingers, while the second set of the moving comb fingers may be interdigitated with the second set of the stator comb fingers. The capacitor structures may have other geometry than the comb fingers.

The central body may be configured to rotate out of the device plane. In such example, illustrated in Figure 2c b), the central body is moving rotationally out of the device plane. The first stator and the second stator may be not in the device plane. The first stator and the second stator may be aligned adjacent to the central body in a vertical direction (z-direction perpendicular to the device plane) in order to facilitate the movement of the central body out of the device plane. When the central body 201 rotates in a counterclockwise direction out of the xy-plane, the capacitance $C_{DRV1}$ of the first capacitor 204 may increase while the capacitance $C_{DRV2}$ of the second capacitor 205 may decrease.

This arrangement, when capacitors 104 and 105 have opposite polarities (or phase), allows to minimize the AC current in the moving structure and eliminate its effect on the determination of the angular rate of rotation of the gyroscope. An advantage is that the capacitance with the opposite polarity can be fabricated anywhere in the gyroscope where the movement in the direction opposite to the first capacitor's direction is present.

Example 2

The MEMS gyroscope, wherein the moving structure comprises a first part and a second part, wherein the first part comprises a first set of moving capacitor structures, the second part comprises a second set of moving capacitor structures, the first stator comprises a first set of stator capacitor structures, and the second stator comprises a second set of stator capacitor structures, and wherein the first set of moving capacitor structures and the first set of stator capacitor structures form the first capacitor, the second set of moving capacitor structures and the second set of stator capacitor structures form the second capacitor, and wherein the moving structure also comprises a coupling structure between the first part and the second part, wherein the coupling structure is configured so that the first part and the second part move in the opposite directions.

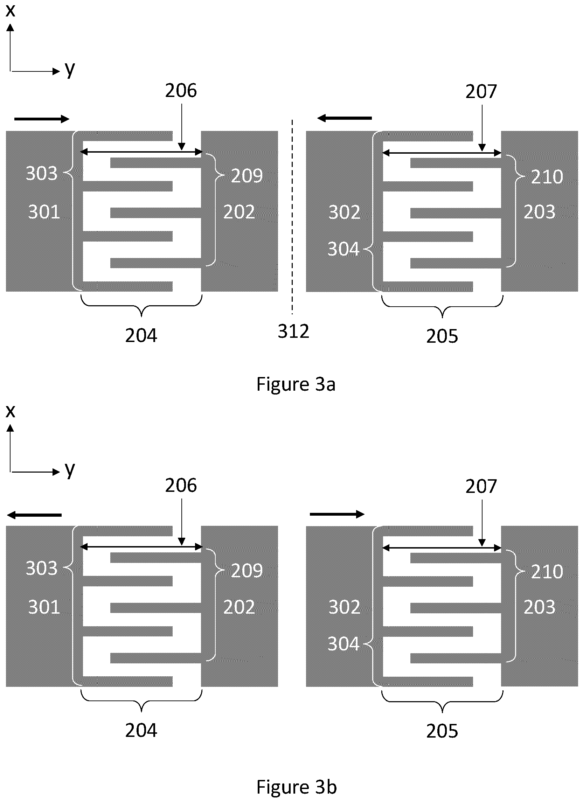

In the second example of this disclosure, which is illustrated in Figures 3a and 3b, the moving structure of the MEMS gyroscope may comprise a first part 301 and the second part 302. The first part 301 and the second part 302 may be set to the moving structure electric potential by a bias voltage signal $V_{MOV}$.

The first part 301 may comprise a first set of moving capacitor structures 303. The second part 302 may comprise a second set of moving capacitor structures 304. As in the previous example, the first stator 202 may comprise the first set of stator capacitor structures 209. The second stator 203 may comprise the second set of stator capacitor structures 210.

In this example, the first set of moving capacitor structures 303 and the first set of stator capacitor structures 209 may form the first capacitor 204. The second set of moving capacitor structures 304 and the second set of stator capacitor structures 210 may form the second capacitor 205.

As Figures 3a and 3b illustrate, the first set of the moving capacitor structures 303 may extend from the first part 301 in the positive y-direction. The first set of the stator capacitor structures 209 may extend from the first stator 202 in the negative y-direction. The second set of the moving capacitor structures 304 may extend from the second part 302 in the positive y-direction. The second set of the stator capacitor structures 210 may extend from the second stator 203 in the negative y-direction.

The capacitor structures may, for example, be comb fingers. The first set of the moving comb fingers may be interdigitated with the first set of the stator comb fingers, while the second set of the moving comb fingers may be interdigitated with the second set of the stator comb fingers. The capacitor structures may have other geometry than the comb fingers.

In this example, the first part with the first set of the moving capacitor structures 303 and the second part with the second set of the moving capacitor structures 304 may be configured to move in the opposite directions. In other words, the first part with the first set of the moving capacitor structures 303 and the second part with the second set of the moving capacitor structures 304 may be configured to move in an anti-phase. The arrows in Figures 3a and 3b illustrate the direction in which the moving structure move. Specifically, when the first part with the first set of the moving capacitor structures 303 moves in the positive y-direction as in Figure 3a, the second part with the second set of the moving capacitor structures 304 may move in the negative y-direction. In this case, the capacitance $C_{DRV1}$ of the first capacitor 204 may decrease while the capacitance $C_{DRV2}$ of the second capacitor 205 may increase. Alternatively, when the first part with the first set of the moving capacitor structures 303 moves in the negative y-direction as in Figure 3b, the second part with the second set of the moving capacitor structures 304 may move in the positive y-direction. In this case, the capacitance $C_{DRV1}$

of the first capacitor 204 may increase while the capacitance $C_{DRV2}$ of the second capacitor 205 may decrease.

The capacitor structures may, for example, be comb fingers. The first set of the moving comb fingers may be interdigitated with the first set of the stator comb fingers, while the second set of the moving comb fingers may be interdigitated with the second set of the stator comb fingers. The capacitor structures may have other geometry than the comb fingers.

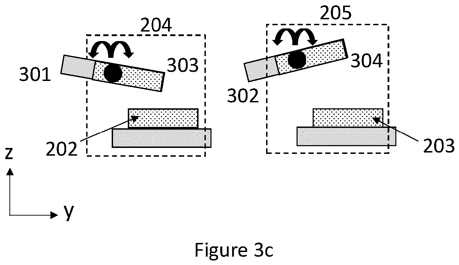

The first part and the second part may be configured to rotate out of the device plane. In such example, illustrated in Figure 3c, the first part and the second part may be moving rotationally out of the device plane. The first stator and the second stator may be not in the device plane. The first stator may be aligned adjacent to the first part and the second stator may be aligned adjacent to the second part in a vertical direction (z-direction perpendicular to the device plane) in order to facilitate the movement of the first part and the second part out of the device plane. When the first part 301 rotates in a clockwise direction out of the xy-plane, the second part 302 may rotate in a counterclockwise direction out of the xy-plane. Therefore, the capacitance $C_{DRV1}$ of the first capacitor 204 may increase while the capacitance $C_{DRV2}$ of the second capacitor 205 may decrease.

The first capacitor 204 may be mirror-symmetric with the second capacitor 205 with respect to a central line 312 which passes between the first part 301 and the second part 302, as illustrated in Figure 3a. Alternatively, the first capacitor 204 may be asymmetric with the second capacitor 205 with respect to the central line 312 (not-illustrated).

The moving structure may comprise at least one at least partly flexible coupling structure. The coupling structure may be a flexible spring. The first part 301 and the second part 302 of the moving structure may be coupled to each other with the at least partly flexible coupling structure, which allows the illustrated in Figures 3a and 3b anti-phase movement but resists in-phase movement when both parts move in the same direction along the y-axis. In other words, the coupling structure is configured so that the first part and second part always move in the opposite directions.

The MEMS gyroscope, wherein the material of the moving structure is silicon.

The material of the MEMS gyroscope of this disclosure may be silicon. Specifically, the material of the moving structure may be silicon. The material of the first stator may be silicon. The material of the second stator may be silicon. Alternatively, the material of the first stator may be metal. The material of the second stator may be metal. In other words, the moving structure, the first stator and the second stator may be fabricated from silicon. Silicon is a semiconductive material, which is sufficiently conductive to equalize the electric potential across the whole moving structure.

**Claims**

1. A MEMS gyroscope comprising

   • a moving structure,
   • a control unit which is configured to apply a bias voltage signal to the moving structure,
   • a first stator, wherein the moving structure and the first stator form a first capacitor, and the control unit is also configured to apply a drive voltage signal to the first stator, wherein the drive voltage signal comprises an AC drive voltage component and a DC drive voltage component,
   • a second stator, wherein the moving structure and the second stator form a second capacitor,
   • and wherein the moving structure and the first and second stators are configured so that a capacitance of the first capacitor increases when a capacitance of the second capacitor decreases, and vice versa,

   **characterized in that**

   • the control unit is also configured to apply a supplementary voltage signal to the second stator, and the supplementary voltage signal comprises a DC supplementary voltage component and comprises no AC voltage component.

2. The MEMS gyroscope according to any of the preceding claims, wherein the moving structure lies in a device layer, wherein the device layer defines a device plane.

3. The MEMS gyroscope according to claim 3, wherein the first stator and the second stator are in the device layer.

4. The MEMS gyroscope according to claim 3, wherein the first stator and the second stator are parallel to the device layer and aligned adjacent to the moving structure, and the z-coordinate of the first stator and the second stator differs from the z-coordinate of the moving structure.

5. The MEMS gyroscope according to any of claims 3-4, wherein the moving structure is configured to be driven linearly in the device plane by the drive voltage signal.

6. The MEMS gyroscope according to any of claims 3-5, wherein the moving structure is configured to be driven in rotational motion around z-direction in the device plane by the drive voltage signal.

7. The MEMS gyroscope according to any of claims 3-4, wherein the moving structure is configured to be driven in rotational motion out of the device plane by the drive voltage signal.

8. The MEMS gyroscope according to any of the preceding claims, wherein

   • the moving structure comprises a central body, and all parts of the central body always move in the same direction, and the central body comprises a first set of moving capacitor structures and a second set of moving capacitor structures,
   • and the first stator comprises a first set of stator capacitor structures,
   • and the second stator comprises a second set of stator capacitor structures,
   and wherein the first set of moving capacitor structures and the first set of stator capacitor structures form the first capacitor, and the second set of moving capacitor structures and the second set of stator capacitor structures form the second capacitor,
   and wherein the first capacitor and the second capacitor are formed on opposite sides from the central body.

9. The MEMS gyroscope according to claim 8, wherein the first capacitor is mirror-symmetric with the second capacitor with respect to a central line which crosses the central body.

10. The MEMS gyroscope according to any of claims 1-7, wherein the moving structure comprises a first part and a second part, wherein

    • the first part comprises a first set of moving capacitor structures,
    • the second part comprises a second set of moving capacitor structures,
    • the first stator comprises a first set of stator capacitor structures,
    • and the second stator comprises a second set of stator capacitor structures,
    and wherein the first set of moving capacitor structures and the first set of stator capacitor structures form the first capacitor, the second set of moving capacitor structures and the second set of stator capacitor structures form the second capacitor,
    and wherein the moving structure also comprises a coupling structure between the first part and the second part, wherein the coupling structure is configured so that the first part and the second part move in opposite directions.

11. The MEMS gyroscope according to claim 10, wherein the first capacitor is mirror-symmetric with the second capacitor with respect to a central line which passes between the first part and the second part.

12. The MEMS gyroscope according to any of the preceding claims, wherein the material of the moving structure is silicon.

13. The MEMS gyroscope according to any of the preceding claims, wherein the first capacitor and the second capacitor are configured so that, when the moving structure moves, the capacitance change in the first capacitor and the capacitance change in the second capacitor have equal magnitude, but opposite sign.

$C_{DRV1}$

$V_{DRV1}$       $V_{MOV}$

Figure 1a

$V_{MOV}$

$C_{DRV1}$       $C_{DRV2}$

$V_{DRV1}$       $V_{DRV2}$

Figure 1b

$V_{MOV}$

$C_{DRV1}$

$C_{DRV2}$

$V_{DRV1}$

$C_O$

$V_O$

Figure 2a

Figure 2b

a)

x

y

202  201  203

b)

z

y

201

202  203

204  205

Figure 2c

Figure 3a

Figure 3b

Figure 3c

**EUROPEAN SEARCH REPORT**

Application Number

EP 24 20 4887

## DOCUMENTS CONSIDERED TO BE RELEVANT

| Category | Citation of document with indication, where appropriate, of relevant passages | Relevant to claim |
|---|---|---|
| Y | US 7 231 824 B2 (HONEYWELL INT INC [US]) 19 June 2007 (2007-06-19) * column 4, line 59; figure 1 * * column 5, lines 54-67 * ----- | 1-13 |
| Y | LIU HAIPENG ET AL: "Design and test on the drive circuit of micro-machined gyroscope", COMPUTER, MECHATRONICS, CONTROL AND ELECTRONIC ENGINEERING (CMCE), 2010 INTERNATIONAL CONFERENCE ON, IEEE, USA, 24 August 2010 (2010-08-24), pages 314-317, XP031780901, ISBN: 978-1-4244-7957-3 * figure 5 * ----- | 1-13 |

**CLASSIFICATION OF THE APPLICATION (IPC)**

INV.
G01C19/5776

**TECHNICAL FIELDS SEARCHED (IPC)**

G01C

The present search report has been drawn up for all claims

| Place of search | Date of completion of the search | Examiner |
|---|---|---|
| The Hague | 14 March 2025 | Asthalter, Tanja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4887

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | | Publication date | Patent family member(s) | | Publication date |
|---|---|---|---|---|---|
| US 7231824 | B2 | 19-06-2007 | EP | 1855086 A2 | 14-11-2007 |
| | | | JP | 2007304099 A | 22-11-2007 |
| | | | KR | 20070109922 A | 15-11-2007 |
| | | | US | 2006213266 A1 | 28-09-2006 |

EPO FORM P0459

For more details about this annex : see Official Journal of the European Patent Office, No. 12/82